# EUROPEAN PATENT APPLICATION

(11) **EP 3 024 168 A1**
(43) Date of publication of application: **25.05.2016**
(21) Application number: 14460091.3
(22) Date of filing: 19.11.2014
(51) Int. Cl.: H04L 9/00, H04L 9/32

(54) **Method and apparatus for managing certificates**

(71) Applicant: Motorola Solutions, Inc., Schaumburg IL 60196 (US)
(72) Inventor: Kruegel, Chris A., Plainfield, IL 60585 (US); Grzesik, Andrzej, 43-600 Jaworzno (PL); Himawan, Erwin, Chicago, IL 60659 (US); Metke, Anthony R., Naperville, IL 60563 (US); Thomas, Shanthi E., Hoffmann Estates, IL 60010 (US); Turner, Steven K., Cary, IL 60013-9774 (US)
(74) Representative: Palka, Grazyna

(57) **Abstract**

A certificate management processor (CMP) in a public key infrastructure (PKI) receives a request for a certificate management operation. The CMP determines that the request is associated with at least one of an end entity and a service. The CMP identifies a certificate management identifier associated with at least one of the end entity and the service. The CMP retrieves at least one status associated with the certificate management identifier and/or at least one status associated with the certificate management operation. The CMP performs the certificate management operation on a certificate when the retrieved at least one status is determined to not be suspended.

## Description

### BACKGROUND OF THE INVENTION

In large communication systems, public key certificates may be used for access control. For example, public key certificates may be used to control who is authorized to access certain services, such as, a virtual private network. In order to obtain a certificate to access certain service(s), an end entity sends a certificate signing request to a certification authority (CA) in a public key infrastructure (PKI). The certificate generated by the CA certifies the ownership of a public key by the named subject of the certificate and binds an identity of the end entity to the public key by providing, for example, information about the subject of the certificate, the validity of the certificate, and applications and services associated with the certificate. This allows others (relying parties) to rely upon signatures or assertions made by a private key that corresponds to the certified public key. In these models of trust relationships, the CA is a trusted third party that is trusted by both the subject (owner) of the certificate and the party relying upon the certificate.

Certificates may need to be revoked prior to expiry. For example, a certificate may need to be revoked if the certificate subject ceases to be trusted, perhaps because the attributes included in the certificate have changed. In another example, a certificate may need to be revoked if the certificate subject's private key is stolen or otherwise compromised such that the signatures made by the certificate subject's private key can no longer be trusted. Revoked certificates may be published in a certificate status information database, such as a Certificate Revocation List (CRL). When a relying party receives information with a certificate from the certificate subject, the relying party may determine the status of the certificate by directly accessing the CRL or by using an online certificate status protocol (OCSP) or a Server-based Certificate Validation Protocol (SCVP). Subsequent to the relying party determining that the certificate has been revoked, the relying party may deny access to service(s) identified in the revoked certificate. Once a certificate is revoked, it cannot be un-revoked. Instead, a revoked certificate may be replaced with a new certificate.

In some instances, instead of revoking a certificate, it may be necessary to temporarily restrict or suspend privileges associated with a specific end entity (i.e., a specific device or a user) or it may be necessary to temporarily restrict or suspend privileges associated with accessing specific services within a system. For instance, if a device is misplaced, it may be necessary to temporarily restrict or suspend access to one or more services on the device or to temporarily restrict access associated with a user of the device until more data can be gathered to determine if the temporary restriction should be changed to permanent revocation or if the temporary restriction on the device should be removed. Consider for example, that a user reports misplacing a device and the user also suspects that the device is retrievable, for example, because the device was unintentionally left at a location. Once the user reports that the device has been misplaced, it may be desirable to temporarily restrict access to one or more services on the device or associated with the user for a period during which the user is trying to locate the device.

A current open source certificate authority provides a "suspend" state wherein a certificate in the suspend state is placed in the CRL. When the certificate becomes "unsuspended", it is removed from the CRL. With this scheme, when the certificate is suspended, it is invalid and cannot be used. However, when the certificate is suspended, the end entity may obtain and use new certificate(s), wherein the newly obtained certificate(s) may be used to access services that the suspended certificate would otherwise restrict access to.

It may also be necessary to temporarily restrict valid end entities from requesting certain operations. Consider, for example, a large system where a large number of devices is being deployed and consider that the system controls access to a common service via certificates. As such, the system must generate a certificate for each device in order for the device to access the common service. Consider also that some configuration steps must be performed on each new device before the device is to be allowed to access the common service. In this case, there may be a need to restrict, limit or gradually roll-out access to the common service or there may be a need to restrict, limit or gradually roll-out deployment of the certificates associated with the common service depending, for example, on the configuration steps.

Current PKI systems allow for management of individual certificate, i.e., individual certificates may be issued, suspended or revoked one at a time. An end entity may be associated with more than one certificate. For example, a device may be configured to execute secured texting or secured voice over IP (VoIP) services, each of which is access via a certificate. There is no current avenue for managing a group of certificates associated with the end entity in a single operation.

Accordingly, there is a need for method and apparatus for managing certificates.

### BRIEF DESCRIPTION OF THE SEVERAL VIEWS OF THE DRAWINGS

The accompanying figures, where like reference numerals refer to identical or functionally similar elements throughout the separate views, together with the detailed description below, are incorporated in and form part of the specification, and serve to further illustrate embodiments of concepts that include the claimed invention, and explain various principles and advantages of those embodiments.
FIG. 1 is a block diagram of a system operating in accordance with some embodiments.
FIG. 2 is a block diagram of a public key infrastructure device used in accordance with some embodiments.
FIG. 3 is a flowchart of a method of used in accordance with some embodiments.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

The apparatus and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

### DETAILED DESCRIPTION OF THE INVENTION

Some embodiments are directed to apparatuses and methods for managing certificates. A certificate management processor (CMP) in a public key infrastructure (PKI) receives a request for a certificate management operation. The CMP determines that the request is associated with at least one of an end entity and a service. The CMP identifies a certificate management identifier associated with at least one of the end entity and the service. The CMP retrieves at least one status associated with the certificate management identifier and/or at least one status associated with the certificate management operation. The CMP performs an appropriate certificate management operation based on at least one of the status associated with the certificate management identifier and the status associated with the certificate management operation.

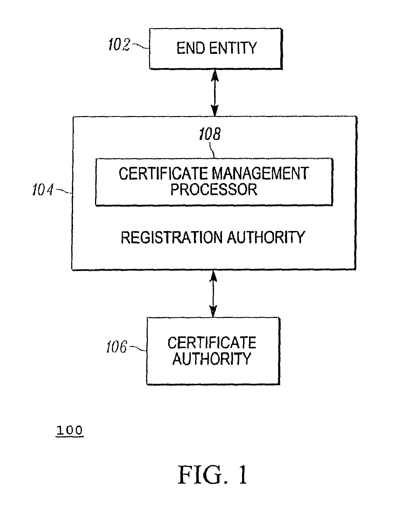

FIG. 1 is a block diagram of a system 100 operating in accordance with some embodiments. System 100 includes an end entity 102 that is configured to request a certificate from a Certificate Authority (CA) 106 in a Public Key Infrastructure (PKI). End entity 102 may be any computing device or a user of the computing device that is configured to request a certificate from the PKI and to use the certificate issued by the PKI. For instance, end entity 102 may be a two-way radio, laptop, smart card, or smart phone or a user of the two-way radio, laptop, smart card, or smart phone. End entity 102 typically issues a certificate signing request (CSR) to a registration authority (RA) 104 in the PKI. RA 104 is a PKI device that performs certificate enrollment request vetting functions on behalf of CA 106. In an embodiment, RA 104 may include a certificate management processor (CMP) 108. Although CMP 108 is shown to be included in RA 104, CMP 108 may be included in other PKI devices.

CMP 108 is configured to manage certificate management operation(s) for one or more certificates associated with particular certificate enabled services(s) and/or end entities. A certificate management operation may include, for example, certificate issuance (for example, based on a certificate management operation request such as a CSR), temporary suspension of a certificate, reinstatement or renewal of a suspended certificate, and rekeying, renewing, and/or permanently revoking a certificate. CMP 108 may determine a certificate enabled service (also referred to herein simply as a service) based, for example, on attributes associated with fields associated with the certificate management operation request. For instance, CMP 108 may determine a certificate enabled service based on the subject distinguished name, the subject alternative name, an extended key usage, a certificate policy and/or a private certificate extension (i.e., a manufacture specific extension) associated with a CSR.

In order to ensure authorized access to a requested service, subsequent to receiving a certificate management operation request from, for example, end entity 102, a user, or a key management facility, CA 106 or another PKI device associated with CA 106 (for example, RA 104) applies an appropriate certificate management policy based on, for example, the X.509 standard. The X.509 standard specifies, among other things, standard formats for public key certificates. The X.509 standard includes certificate extensions for allowing certificates to be customized to applications. In particular, the X.509 extensions are used to support the addition of fields in the certificate.

Typically in PKI systems while there is an association between each certificate and an end entity and/or service, there is no association between a group of certificates assigned to the end entity and/or service. For example, there is typically no association between end entity 102 and the certificates assigned to end entity 102 as a group. In an embodiment, CMP 108 is configured to assign a certificate management identifier (ID) to each end entity and/or each certificate enabled service. If the end entity is a device, the certificate management ID may be a device serial number or an International Mobile Station Equipment Identity (IMEI) or any other identifier that will allow the user to resolve a search of the device. The certificate management ID(s) may be placed into certificates as an X.509 private certificate extension. For example, CMP 108 may include the certificate management ID associated with end entity 102 in each certificate assigned to end entity 102. The certificate management ID may also be encoded into one or more of the subject distinguished name, the subject alternative name, the extended key usage, the policy, and the certificate private extension in a certificate. Using the certificate management ID, CMP 108 may select, for an appropriate certificate management operation, all or a sub-set of certificates associated with end entity 102 and/or a given service.

Subsequent to identifying the certificate management ID(s) associated with end entity 102 and/or a given service in response to a certificate management operation request, CMP 108 may retrieve the status associated with the certificate management ID(s) and/or the status associated with the certificate management operation. CMP 108 applies an appropriate certificate management policy based on the status associated with the certificate management ID(s) and/or the status associated with the certificate management operation. Consider, for example, that CMP 108 receives a certificate management operation request to rekey a certificate associated with end entity 102. If end entity 102 was previously reported to be stolen and the status associated with the certificate management ID of end entity 102 is a revoked status, CMP 108 applies an appropriate certificate management policy based on the status of the certificate management ID of end entity 102 (i.e., CMP 108 revokes the certificate rather than rekeying the certificate as requested in the certificate management operation request.)

In applying the appropriate certificate management policy, CMP 108 may change a state of a certificate for end entity 102, a state of end entity 102, a state of a service, and/or a state of the certificate management operation. For example, for a secured voice-over-IP (VoIP) service, a state may be that no secure VoIP certificates can be issued or updated. In another example, a state of a virtual private network service may indicate that the service is on hold and cannot be accessed. A state of a certificate management operation may indicate that certain operations may or may not be performed. For example, the state of a rekey operation may indicate that rekeying operations may or may not be performed, depending on the service and/or end entity associated with the operation. For instance, the state of a rekey operation may indicate that rekeying operations may not be performed for virtual private network service but that rekeying operations may be performed for VoIP. In another example, the state of a rekey operation may indicate that rekeying operations may or may not be performed, regardless of the service associated with the operation.

A certificate may indicate that a service is certificate-enabled and that the certificate-enabled service is associated with the certificate. Consider, for example, that end entity 102 is a new device issued to a user and end entity 102 is to be used to access secured VoIP service and secured text messaging service. The user may request a certificate for each service that is be accessed via end entity 102. An identifier in the CSR may identify end entity 102 as belonging to the requesting user. When the certificate is issued for the secured VoIP service, one or more certificate management IDs in the certificate may identify end entity 102 (i.e., the device and/or the user). The issued certificate also may include a certificate management ID that indicates that the certificate is configured to permit access to secured VoIP services. Similarly, when the certificate is issued for the secured text messaging service, one or more certificate management IDs in the certificate may identify end entity 102 (i.e., the device and/or the user). The issued certificate may also include a certificate management ID that indicates that the certificate is configured to permit access to secured text messaging service. Accordingly, using the certificate management IDs, CMP 108 may manage certificates at an end entity level and/or service level, rather than only managing each certificate associated with an end entity one at a time. For example, at the user level, CMP 108 may manage certificates for a group of devices associated with a given user and, at the device level, CMP 108 may manage certificates for a group of services executed on the device.

In some embodiments, in order to perform certificate management operations associated with an end entity, CMP 108 may include a "select all" option, wherein by selecting, for example, the certificate management ID associated with end entity 102 and selecting the "select all" option, CMP 108 may retrieve all certificates associated with end entity 102 for one or more certificate management operations. CMP 108 may also perform certificate management operations on a subset of certificates issued to end entity 102 in one or more operations. CMP 108 may also be used to select multiple certificate management IDs so that more than one end entity may be selected at one time for a single certificate management operation.

In addition to the "select all" option, CMP 108 may be used to select a certificate for certificate management operation(s) based on a "service type" option and "end entity type" option. Consider, for example, that a system supports multiple types of certificate enabled services, including, but not limited to, secured text messaging and secured VoIP. When, for example, a service type option for secured text messaging is selected, CMP 108 may perform certificate management operations on all certificates associated with the selected service type (i.e., secured text messaging) without performing any certificate management operations on certificates associated with secured VoIP service. Consider also that a system is configured to include different types of devices, wherein the devices are grouped according to a device type. When the end entity type option is selected, CMP 108 may perform certificate management operations on certificates associated with the group of devices identified as belonging to the selected end entity type. The selectable options may be included in issued certificates as X.509 certificate private extensions or other fields and also in the CSRs to allow CMP 108 to filter any certificate requests.

Accordingly, when CMP 108 receives a request for a certificate management operation, CMP 108 is configured to determine that the request is associated with a given end entity and/or service. CMP 108 identifies a certificate management ID associated with the given end entity and/or service. CMP 108 retrieves a status associated with the certificate management ID for the given end entity and/or service. CMP 108 performs an appropriate certificate management operation based on at least one of the status associated with the certificate management identifier and the status associated with the certificate management operation.

In some instances, when the certificate management operation includes suspending one or more certificates associated with an end entity or service, the certificate(s) may remain suspended until a state of the service and/or end entity can be determined. Consider, for example, that end entity 102 is reported to be misplaced. CMP 108 may be used to temporarily suspend one or more certificates for granting access to services within end entity 102 until the state of end entity 102 can be subsequently determined. This blocks end entity 102 from using the suspended certificate(s) to access services. If it is subsequently determined that end entity 102 is lost or stolen, CMP 108 may be used to revoke the suspended certificates for granting access to services within end entity 102. If, on the other hand, it is subsequently determined that end entity 102 has been found, CMP 108 may be used to reinstate/renew the suspended certificates for granting access to services within end entity 102. Therefore, CMP 108 may perform one of subsequently revoking the certificate, and subsequently reinstating the certificate, based on a determined state. This allows end entity 102 to again use the certificate(s) to access services. CMP 108 thus allows for granularity of management at a certificate level and at an end entity level.

If at least one certificate is suspended at the end entity level, a predefined certificate management operation may be prohibited for the end entity while the certificate associated with the end entity is in the suspended state. In one case, subsequent to suspending desired certificate(s) associated with end entity 102, CMP 108 may prevent end entity 102 from using one or more existing certificates (even if those existing certificates are not suspended) and/or may prevent the issuance of new certif cates to end entity 102.

Subsequent to performing a certificate management operation, CMP 108 may inform other entities (i.e., a second party such as a relying party or backend system) of the certificate management operation. Therefore, in addition to current Certificate Revocation Lists (CRLs) which indicate if a certificate is revoked, CMP 108 may provide information about certificate management operations, including, for example, temporary suspensions and/or status associated with a certificate associated with the certificate management ID. In an embodiment, CMP 108 may provide the information in a certificate management ID status list that may be used in addition to or instead of the CRL. The CRL and/or the certificate management ID status list may be indexed with the certificate management ID instead of or in addition to a certificate serial number. When the relying party accesses the CRL and/or the certificate management ID status list, based on a changed state of a certificate for an end entity and or service, the relying party may determine privileges associated with the certificate for the end entity. The relying party may also perform certain operations based on the changed state or fail to perform an operation based on the changed state.

When a relying party is informed that a certificate management operation has been performed on a certificate, the privileges provided by the certificate may be determined by the relying party or the system informed about the certificate management operation. For example, when a certificate is suspended, the privileges provided by the certificate may be fully revoked or may be limited or fully enabled but monitored and/or logged as determined by a system informed about the suspended status. The suspended state of a certificate may also be used at an end entity to drive specific behavior of the end entity beyond operations directly tied to the suspended certificate(s).

An Online Certificate Status Protocol (OCSP) is an Internet protocol used for obtaining the revocation status of an X.509 digital certificate. Subsequent to receiving a revocation status request for a certificate, an OCSP responder may return a signed response to a requestor indicating the status of the certificate. For example, the response may indicate that the status for the certificate specified in the request is "good", "revoked", or "unknown". In an embodiment, the response from the OCSP responder may also indicate that the status for the certificate specified in the request is suspended based on information obtained from CMP 108. Response extensions may be used to convey additional information on assertions made by the responder regarding the status of the certificate. For instance, response extensions may be used to convey that a certificate in the "revoked" state has been revoked either temporarily or permanently or that the certificate is in a suspended state. In an embodiment, the functions associated with CMP 108 may be added to all OCSP or other certificate status protocols to allow entities to validate the certificate being presented and allow a dynamic changing of the status as needed.

A current Key Management Facility (KMF) device (also referred to herein. as a key management device) manages symmetric keys and supports a "no-service" function with end entities. When the "no-service" function is enabled, the KMF device blocks an end entity from receiving key management and provides an indication to the end entity. The blocking may be removed and the end entity brought back into service, if needed, while it still in the field. However, current KMF devices are only used for end-to-end symmetric encryption keys and only block the end entity from getting new symmetric keys and verifying existing symmetric keys. Current KMF devices do not prevent the end entity from using the certificates it currently has.

To prevent an end entity from using its current certificates when the "no-service" function is enabled, CMP 108 may communicate with the KMF device, wherein when the end entity is selected for the "no-service" function at the KMF device, CMP 108 may also receive a no-service request and suspend all certificate usage for the end entity. Accordingly, when all certificate usage on the end entity is suspended, CMP 108 may enable the "no-service" function. Similarly, when all symmetric keys on the end entity are removed, CMP 108 may be configured to remove all certificates from the end entity, and vice versa. In an embodiment, when CMP 108 suspends a certificate, CMP 108 may send the suspended status to the KMF device for the KMF device to suspend corresponding symmetric keys. Consider an example where a device executes a secured push-to-talk application to communicate with, for example, a P25 radio. When the certificate for accessing the secured push-to-talk application is suspended, CMP 108 may send the suspended status information for the certificate to the KMF device so that the KMF device may also suspend symmetric keys for that device. An embodiment therefore provides for an interaction between symmetric key management and certificate management in an end entity on a feature or end entity level.

In an embodiment, CMP 108 may also have a mode of operation, wherein a certificate may be initially issued in the suspended state, and the certificate may be removed from the suspended state only after certain steps (for example, additional provisioning steps) are taken in order for a device to begin using the certificate for its intended purpose. Consider an example wherein a device needs a certificate to access an online provisioning server that is allowed to accept a certificate in the suspended state. After the online provisioning server determines that the device has, for example, up-to-date software and other provisioning data, the online provisioning server may notify the PKI to change the state of the device's certificates to a "non-suspended" state in a trusted manner. Such a suspended state may thus be thought of as a "provisioning state", wherein when CMP 108 determines that a device is a provisioning mode of operation, CMP 108 may report the status of the certificate in the provisioning state as suspended to one or more servers (referred to herein as second party), except to a provisioning server (referred to herein as a third party). Rather than have both a provisioning state and/or status and a suspended status, the PKI may report the certificate status as valid to the provisioning server so that other servers that are not concerned with the provisioning steps do not have to learn about the provisioning state and/or status.

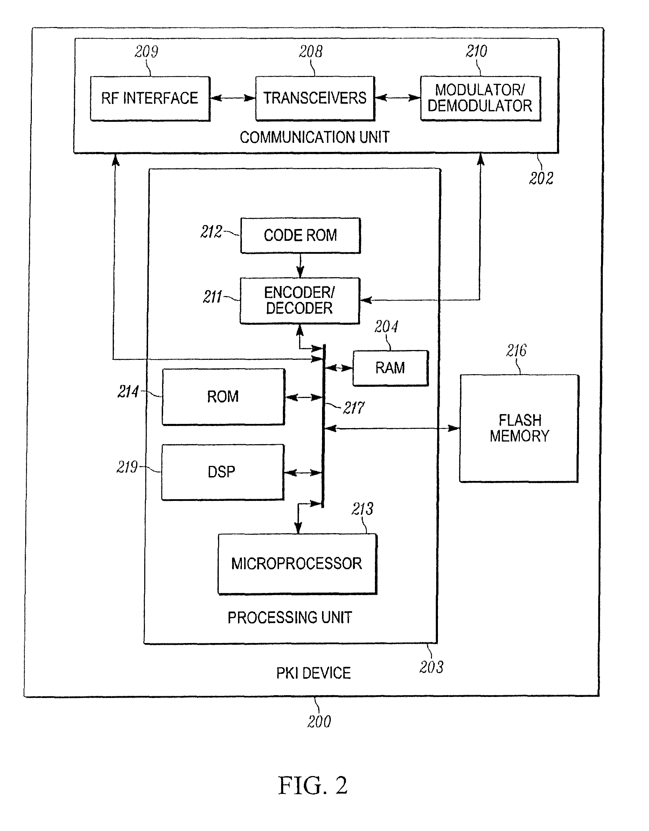

FIG. 2 is a block diagram of a public key infrastructure device 200, such as RA 104 or CA 106, used in accordance with some embodiments. Communication device 200, for example, may include a communications unit 202 coupled to a common data and address bus 217 of a processor 203. The processor 203 may be configured to perform the functions and operations described herein as being performed by CMP 108. Communication device 200 may also include an input unit (e.g., keypad, pointing device, etc.) (not shown), an output transducer unit (e.g., speaker) (not shown), an input transducer unit (e.g., a microphone) (MIC) (not shown), and a display screen(not shown), each coupled to be in communication with the processor 203.

The processor 203 may include, that is, implement, an encoder/decoder. 211 with an associated code read-only memory (ROM) 212 for storing data for encoding and decoding voice, data, control, or other signals that may be transmitted or received by communication device 200. The processor 203 may further include one or more of a microprocessor 213 and digital signal processor (DSP) 219 coupled, by the common data and address bus 217, to the encoder/decoder 211 and to one or more memory devices, such as a ROM 214, a random access memory (RAM) 204, and a static memory 216. One or more of ROM 214, RAM 204 and flash memory 216 may be included as part of processor 203 or may be separate from, and coupled to, the processor 203. The encoder/decoder 211 may be implemented by microprocessor 213 or DSP 219, or may be implemented by a separate component of the processor 203 and coupled to other components of the processor 203 via bus 217.

Communications unit 202 may include an RF interface 209 configurable to communicate with network components, and other user equipment within its communication range. Communications unit 202 may include one or more broadband and/or narrowband transceivers 208, such as an Long Term Evolution (LTE) transceiver, a Third Generation (3G) (3GGP or 3GGP2) transceiver, an Association of Public Safety Communication Officials (APCO) Project 25 (P25) transceiver, a Digital Mobile Radio (DMR) transceiver, a Terrestrial Trunked Radio (TETRA) transceiver, a WiMAX transceiver perhaps operating in accordance with an IEEE 802.16 standard, and/or other similar type of wireless transceiver configurable to communicate via a wireless network for infrastructure communications. Communications unit 202 may also include one or more local area network or personal area network transceivers such as Wi-Fi transceiver perhaps operating in accordance with an IEEE 802.11 standard (e.g., 802.11a, 802.11b, 802.11g), or a Bluetooth transceiver. The transceivers may be coupled to a combined modulator/demodulator 210 that is coupled to the encoder/decoder 211.

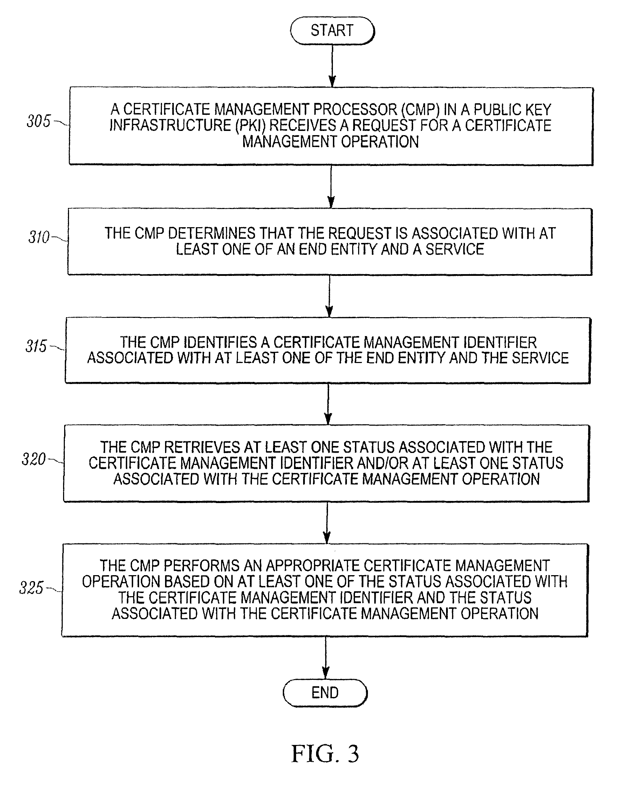

The one or more memory devices 204, 212, 214, 216 store code for decoding or encoding data such as control, request, or instruction messages, channel change messages, and/or data or voice messages that may be transmitted or received by device 200 and other programs and instructions that, when executed by the processor 203, provide for the device 200 (for example, RA 106 or CA 110) to perform the functions and operations described herein as being performed by such a device, such as the implementation of the encoder/decoder 211 and one or more of the steps set forth in FIG. 3.

FIG. 3 is a flow diagram of a method for managing certificates in accordance with some embodiments. At 305, a certificate management processor (CMP) in a public key infrastructure (PKI) receives a request for a certificate management operation. At 310, the CMP determines that the request is associated with at least one of an end entity and a service. At 315, the CMP identifies a certificate management identifier associated with at least one of the end entity and the service. At 320, the CMP retrieves at least one status associated with the certificate management identifier and/or at least one status associated with the certificate management operation. At 325, the CMP performs an appropriate certificate management operation based on at least one of the status associated with the certificate management identifier and the status associated with the certificate management operation.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, contains a list of elements does not include only those elements but may include other, elements not expressly listed or inherent to such process, method, article, or apparatus. An element proceeded by "comprises ... a", "has ... a", "includes ... a", "contains ... a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way, but may also be configured in ways that are not listed.

It will be appreciated that some embodiments may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, an embodiment can be implemented as a computer-readable storage medium having computer readable code stored thereon for programming a computer (e.g., comprising a processor) to perform a method as described and claimed herein. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), all EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A method comprising:
receiving, at a certificate management processor (CMP) in a public key infrastructure (PKI), a request for a certificate management operation;
determining, by the CMP, that the request is associated with at least one of an end entity and a service;
identifying, by the CMP, a certificate management identifier associated with at least one of the end entity and the service;
retrieving, by the CMP, at least one of a status associated with the certificate management identifier and a status associated with the certificate management operation; and
performing, by the CMP, an appropriate certificate management operation based on at least one of the status associated with the certificate management identifier and the status associated with the certificate management operation.

2. The method of claim 1, wherein performing the appropriate certificate management operation comprises changing at least one of a state of a certificate for the end entity, a state of the end entity, a state of the service, and a state of the certificate management operation.

3. The method of claim 1, further comprising:
reporting, by the CMP, at least one of the status associated with the certificate management identifier and a status associated with a certificate associated with the certificate management identifier to a second party.

4. The method of claim 3, wherein performing the appropriate certificate management operation comprises changing at least one of a state of a certificate for the end entity and a state of the service, wherein the method further comprises at least one of:
determining, by the second party, privileges associated with the certificate for the end entity based on a changed state;
performing an operation, at the second party, based on the changed state; and
failing to perform an operation, at the second party, based on the changed state.

5. The method of claim 3, wherein the reporting comprises reporting the status of the certificate as suspended to the second party and as valid to a third party.

6. The method of claim 1, wherein the performing comprises:
suspending the certificate for at least one of the end entity and the service; and
one of subsequently revoking the certificate and subsequently reinstating the certificate based on a determined state.

7. The method of claim 1, wherein the performing comprises:
suspending the certificate for at least one of the end entity and the service; and
prohibiting a predefined certificate management operation for at least one of the end entity and the service associated with a suspended certificate while the certificate for at least one of the end entity and the service is suspended.

8. The method of claim 1, wherein the performing comprises suspending at least one certificate associated with at least one of the end entity and the service.

9. The method of claim 1, wherein the performing comprises suspending at least one certificate for at least one of a service type and a device type.

10. The method of claim 1, wherein the request is a no-service request received from a key management device configured to manage symmetric, keys and wherein the performing comprises one of suspending and revoking a certificate based on the no-service request.

11. The method of claim 1, wherein the certificate management operation comprises at least one of issuance, temporary suspension, reinstatement, renewal, rekeying, and permanent revocation of at least one certificate.

12. A public key infrastructure device comprising:
a memory;
a transceiver configured to receive a request for a certificate management operation;
a certificate management processor (CMP) configured to execute a set of instructions that perform functions of:
determining that the request is associated with at least one of an end entity and a service;
identifying a certificate management identifier associated with at least one of the end entity and the service;
retrieving at least one of a status associated with the certificate management identifier and a status associated with the certificate management operation; and
performing an appropriate certificate management operation based on at least one of the status associated with the certificate management identifier and the status associated with the certificate management operation.

13. The public key infrastructure device of claim 12, wherein the CMP is further configured to change at least one of a state of a certificate for the end entity, a state of the end entity, a state of the service, and a state of the certificate management operation.

14. The public key infrastructure device of claim 12, wherein the CMP is further configured to report at least one of the status associated with the certificate management identifier and a status associated with a certificate associated with the certificate management identifier to a second party.

15. The public key infrastructure device of claim 14, wherein the CMP is further configured to change at least one of a state of a certificate for the end entity and a state of the service, wherein a changed state is transmitted to the second party and the second party at least one of:
determines privileges associated with the certificate for the end entity based on the changed state;
performs an operation based on the changed state; and
fails to perform an operation based on the changed state.

16. The public key infrastructure device of claim 12, wherein the request is a request for a new certificate for at least one of the end entity and the service, and
wherein the CMP is configured to determine that the request is associated with at least one of the end entity and the service and the CMP is configured to assign the certificate management identifier for at least one of the end entity and the service associated with the request to the new certificate.

17. The public key infrastructure device of claim 12, wherein the CMP is configured to perform the certificate management operation by suspending a certificate and one of subsequently revoking the certificate and subsequently reinstating the certificate based on a determined state.

18. The public key infrastructure device of claim 12, wherein the CMP is configured to perform the certificate management operation by suspending a certificate and prohibiting a predefined certificate management operation for at least one of the end entity and the service associated with a suspended certificate while the certificate is in a suspended state.

19. The public key infrastructure device of claim 12, further comprising at least one certificate for at least one of a service type and a device type and wherein the CMP is configured to perform the certificate management operation by:
suspending at least one certificate associated with at least one of the service: type and the device type in an operation.

20. The public key infrastructure device of claim12, wherein the request is a no-service request received from a key management device configured to manage symmetric keys and wherein the CAMP is configured to perform the certificate management operation by at least one of suspending and revoking a certificate based on the no-service request.
